# EUROPÄISCHE PATENTSCHRIFT

(11) **EP 3 974 284 B1**
(45) Veröffentlichungstag und Bekanntmachung des Hinweises auf die Patenterteilung: **23.07.2025**
(21) Anmeldenummer: 20199007.4
(22) Anmeldetag: 29.09.2020
(51) Int. Cl.: B61L 15/00, G02B 27/01, B60K 35/00, G06F 11/16, B60K 35/22, B60K 35/231, B60K 35/29, B60K 35/90

(54) **VERFAHREN ZUM DARSTELLEN EINER AUGMENTED REALITY UND VORRICHTUNGEN ZUR ANWENDUNG DES VERFAHRENS**
METHOD FOR REPRESENTING AUGMENTED REALITY AND DEVICES FOR APPLYING THE METHOD
PROCÉDÉ DE REPRÉSENTATION D'UNE RÉALITÉ AUGMENTÉE ET DISPOSITIFS DESTINÉS À L'UTILISATION DU PROCÉDÉ

(43) Veröffentlichungstag der Anmeldung: 30.03.2022
(73) Patentinhaber: Siemens Mobility GmbH, 81739 München (DE)
(72) Erfinder: Griebel, Stephan, 38302 Wolfenbüttel (DE)
(74) Vertreter: Siemens Patent Attorneys

(56) Entgegenhaltungen:
- EP-A1- 1 739 556
- EP-A1- 3 121 638
- WO-A1-2019/016102
- US-A- 5 805 134
- US-A1- 2009 017 424
- US-A1- 2017 261 746
- US-A1- 2018 187 397
- TAO ZHAN ET AL: "Multifocal displays: review and prospect", PHOTONIX, vol. 1, no. 1, 30 March 2020 (2020-03-30), XP055738141

## Beschreibung

Die Erfindung betrifft ein Verfahren zum rechnergestützten Darstellen einer Augmented Reality. Außerdem betrifft die Erfindung eine Darstellungsvorrichtung für eine Augmented Reality. Weiterhin betrifft die Erfindung ein Fahrzeug mit einer Darstellungsvorrichtung für eine Augmented Reality. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Das Dokument KR 2019 007 8944 A betrifft ein Augmented-Reality-Head-up-Anzeigesystem für ein Schienenfahrzeug. Das Anzeigesystem umfasst eine erste und eine zweite Head-up-Anzeige, die in vorderen bzw. hinteren Fahrständen eines Schienenfahrzeugs installiert sind, eine Erfassungseinheit zum Erfassen einer Umgebung des Schienenfahrzeugs zum Erzeugen von Streckeninformationen und eine Steuereinheit zum Ausgeben eines Bildes, das mit einer Augmented Reality auf der ersten und der zweiten Head-up-Anzeige angezeigt wird.

Die Darstellung einer Augmented Reality bringt den Vorteil, dass dem Zugführer Informationen über die vor ihm liegende Strecke übermittelt werden können, welche über diejenigen hinausgehen, die er die Frontscheibe des Fahrzeuges ohnehin bekommt. Diese zusätzlichen optischen Informationen könnten z.B. Eisenbahnsignale sein, die in der tatsächlichen Außenwelt physisch nicht vorhanden sind. Hierdurch sind Einsparungen von physischen Streckenelementen realisierbar unter Beibehaltung eines angemessenen Sicherheitsniveaus.

Allerdings birgt die Darstellung der Augmented Reality die Gefahr, dass eine fehlerhafte Anzeige zu Missverständnissen des Zugführers hinsichtlich des Zugverkehrs führt. Die Folge können gefährliche Unfälle sein, welche unbedingt vermieden werden müssen.

Dokument EP 3121638 A1 beschreibt ein Head-Up-Display-System, das für ein Fahrzeug konfiguriert ist, sowie ein Verfahren zur Gewährleistung der Sicherheit von Informationen, die mittels eines Head-Up-Displays angezeigt werden, wobei das HUD-System ein Visualisierungssystem umfasst.

Dokument WO 2019/016102 A1 betrifft eine sichere Anzeigevorrichtung mit einem Eingangsport zum Empfangen eines Eingangssignals mit mindestens einer anzuzeigenden Information. Die sichere Anzeigevorrichtung weist mehrere übereinander angeordnete Anzeigematrizen auf und mindestens einen transparenten Anzeigebereich, wobei jede Anzeigematrix der Vielzahl einem Steuermittel zum Steuern der Anzeigematrix zugeordnet ist.

Die Aufgabe der Erfindung liegt daher in der Angabe eines Verfahrens sowie von zur Durchführung des Verfahrens geeigneten Vorrichtungen, welche im Fahrstand von Schienenfahrzeugen eine Augmented Reality erzeugen können und dabei im Betrieb den im Zugverkehr geltenden Sicherheitsanforderungen gerecht werden. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass das erste Head-up-Display und das zweite Head-up-Display in zwei einander überlagernden Layern angeordnet werden, einander zu einem Bild ergänzende Bildinformationen darstellen.

Als für den Fahrzeugführer vorgesehenes Sichtfeld ist dasjenige Sichtfeld zu verstehen, welches einem auf seinem Bedienplatz sich befindenden Fahrzeugführer zur Verfügung steht, um die Umgebung des Fahrzeugs zu erfassen. Vorzugsweise handelt es sich hierbei um die Frontscheibe des Fahrzeugs, welche mit den beiden Head-up-Display ausgestattet werden kann.

Durch die beiden Head-up-Displays können vorzugsweise auf der Innenseite der Frontscheibe des Fahrzeugs beispielsweise mit Hilfe von Projektoren zusätzliche optische Informationen dargestellt werden, die z.B. Signale oder Warnhinweise enthalten, die in der physischen Realität (Außenwelt) physisch nicht vorhanden sind. Diese zusätzlichen optischen Informationen werden dann dem tatsächlichen Blick aus dem Fahrzeug überlagert und erzeugen auf diese Weise die Augmented Reality.

Die Head-up-Displays selbst sind transparent, so dass die Realität außerhalb des Fahrzeugs durch den Fahrzeugführer wahrgenommen werden kann. Die Informationen, die durch die Augmented Reality (im Folgenden auch abgekürzt AR) zur Verfügung gestellt werden, sind damit den Informationen, die durch beispielsweise eine Frontscheibe des Fahrzeugs dem Fahrzeugführer direkt zugänglich sind, überlagert. Die Head-up-Display können allerdings auch eine virtuelle Realität darstellen.

Als virtuelle Realität (im Folgenden kurz VR) wird die Darstellung der Wirklichkeit (auch als physische Realität bezeichnet) in einer in Echtzeit computergenerierten, interaktiven virtuellen Umgebung bezeichnet. Wie detailliert die VR erzeugt werden muss, hängt vom individuellen Anwendungsfall ab. Im Allgemeinen wird die VR einem dreidimensionalen Raum erzeugt und bildet dessen physikalischen Eigenschaften, insbesondere deren Topographie, vereinfacht ab.

Insbesondere im Schienenverkehr lässt sich Detailliertheit der Darstellung in Abhängigkeit vom Anwendungsfall häufig vereinfachen, da das Schienenfahrzeug das Gleis nicht verlassen kann. Daher können auch zweidimensionale oder sogar eindimensionale virtuelle Realitäten Anwendung finden. Diese können vorteilhaft aus einfachen Modellen der Wirklichkeit wie dem Streckenplan oder einem Fahrplan erzeugt werden.

Voraussetzung für die Anwendung einer VR ist die Kenntnis des Ortes und der Blickrichtung des Betrachters. Dieser muss infolgedessen geortet werden. Wird eine VR für den Schienenverkehr verwendet ergeben sich hierbei gewisse Vereinfachungen. Beispielsweise ist das Sichtfeld eines Zugführers durch die Frontscheibe klar definiert, sodass durch eine Ortung des Zuges bereits der darzustellende Bildausschnitt der VR festgestellt werden kann.

Soll die VR in einer Ausgabevorrichtung dargestellt werden, müssen Bilddaten generiert werden, die zur Erzeugung des Bildes verwendet werden. Die Darstellung der VR ermöglicht es einem Betrachter, die VR intuitiv zu erfassen.

Von der Erzeugung einer Augmented Reality (im folgenden kurz AR) im Sinne der Erfindung ist zu sprechen, wenn einer vorher erzeugten virtuellen Realität (kurz VR) oder der zu betrachtenden Wirklichkeit (physische Realität) zusätzliche Bildinformationen überlagert werden. Die zusätzlichen Bildinformationen bestehen aus Bildelementen und können zum Beispiel vom Betrachter wahrzunehmende Symbole, Textinformationen und Bildmotive umfassen.

Zum Zwecke der Darstellung der AR können beispielsweise die Symbole oder Textinformationen über eine geeignete Ausgabevorrichtung eingeblendet werden. Eine andere Möglichkeit besteht darin, in der VR vorhandene Bildelemente zu verändern. Im letzteren Fall muss erst eine Transformation der Bilddaten dahingehend erfolgen, dass diese als Bildelemente darstellbar sind. Anschließend werden die zusätzlichen Bildinformationen auf einer Ausgabevorrichtung, insbesondere einem Display, dargestellt. Die transformierten Bildelemente können dann einer dargestellten VR oder der zu betrachtenden physischen Realität überlagert werden und schaffen so einen erweiternden Informationsgehalt der AR.

Die Ergänzung der wiedergegebenen Bildinformationen zu einem gemeinsamen Bild wird erfindungsgemäß dazu genutzt, dass Fehler bei der Darstellung der Augmented Reality intuitiv durch den Betrachter (beispielsweise Zugführer) sofort erkannt werden können. Hierzu ist es erforderlich, dass Fehler in der Wiedergabe eines Teils der Informationen zu Bildfehlern führen, die intuitiv leicht wahrzunehmen sind. Um dies zu erreichen stehen vorteilhaft die beiden Layer, gebildet jeweils durch eines der Head-up-Displays, zur Verfügung.

Das Funktionsprinzip der verbesserten Wahrnehmbarkeit von Darstellungsfehlern beruht auf dem Effekt, dass zwei sich überlagernder Layer verwendet werden können, um Bildfehler anzuzeigen, weil Bildfehler in den allermeisten Fällen nur in einem der beiden Layer zur selben Zeit auftreten werden. Die Wahrscheinlichkeit, dass ein Darstellungsfehler nicht auffällt, weil diesbezüglich beide Head-up-Display gleichzeitig versagen, ist bedeutend geringer, als die Wahrscheinlichkeit, dass ein solcher Fehler lediglich in einem der beiden Layer auftritt. Dieser Effekt bewirkt erfindungsgemäß, dass die Wahrscheinlichkeit, Fehler bei der Darstellung der Augmented Reality zu übersehen und damit potentielle Störungen oder sogar Unfälle im Betrieb des Fahrzeugs zu provozieren, bedeutend verringert ist.

Ein weiterer Vorteil der Darstellung durch zwei Head-up-Displays liegt darin, dass bei Wiedergabefehlern die Information durch den Benutzer in vielen Fällen dennoch erfasst werden kann. Hierdurch entsteht eine doppelte Sicherheit. Der Fehler in der Darstellung der Augmented Reality kann wahrgenommen, gemeldet und gegebenenfalls behoben werden, obwohl dieser den Verkehrsbetrieb noch nicht negativ beeinflusst. Die Information wird aufgrund von sinnstiftender Ergänzung bei der Wahrnehmung durch den Benutzer ergänzt und kann in vielen Fällen zur Ableitung der richtigen Entscheidung, gegebenenfalls nach Bestätigung durch eine Fahrdienstleitung, führen. Somit wird auch die Zuverlässigkeit des Betriebs des Fahrzeugs bei auftretenden Fehlern erhöht.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass dass die Bildinformationen Bildelemente widergeben, welche aus ersten Segmenten und zu den ersten Bildsegmenten komplementären zweiten Segmenten aufgebaut sind, wobei die ersten Segmente durch das erste Head-up-Display und die zweiten Segmente durch das zweite Head-up-Display dargestellt werden.

Als komplementäre Segmente der Bildelemente im Sinne der Erfindung sind Bildsegmente zu verstehen, die für sich genommen einzelnen stehen und nur mit den jeweils komplementären Bildsegmenten gemeinsam ein Bildelement ergeben. Die komplementären Segmente stoßen somit aneinander, so dass direkte Grenzen zu den benachbarten Bildsegmenten des jeweils anderen Layers entstehen. Sollten in einem Layer Bildfehler auftreten, so werden diese durch die angrenzenden Bildsegmente, die dem anderen Layer angehören, und noch funktionieren, sehr gut wahrnehmbar. Dies liegt daran, dass der Betrachter auf Bildfehler, die bei direkt aneinander angrenzenden Segmenten auftreten, besonders empfindlich reagiert.

Mögliche Bildfehler könnten die fehlende Darstellung eines Segmentes oder auch ein Versatz benachbarter (komplementärer) Segmente, die unterschiedlichen Layern angehören, sein. Diese werden vorteilhaft dem Betrachter intuitiv deutlich gemacht. Dieser kann reagieren und den Fehler beispielsweise einem Fahrdienstleiter anzeigen und gegebenenfalls korrekte Informationen anfordern oder die Behebung eines mit dem Bildfehler verbundenen technischen Fehlers beauftragen.

Gemäß einer Ausgestaltung der Erfindung ist vorgesehen, dass die Bildelemente durch ein Muster von Streifen erzeugt werden, wobei die Streifen durch Zwischenräume voneinander getrennt sind.

Die Darstellung der Bildelemente in einem Muster von Streifen hat den Vorteil, dass eine Verschiebung der beiden Layer zueinander zur Ausbildung von Interferenzmustern führt. Interferenzen sind für das menschliche Auge sehr gut wahrnehmbar und werden einem Betrachter bereits bei kleinen Verschiebungen sofort auffallen. Daher sind Muster von Streifen besonders geeignet, die intuitive Wahrnehmung von Bildfehlern zu unterstützen.

Es ist nach dieser Ausgestaltung der Erfindung, die Muster von Streifen des einen und des anderen Layers jeweils komplementär auszubilden. Eine Darstellung von Zwischenräumen zwischen den Streifen erfolgt somit nicht, da sich beide Streifenmuster komplementär ergänzen. Erst eine Verschiebung zwischen beiden Layern führt in diesem Fall zu einer Ausbildung von Zwischenräumen zwischen den Streifen, welche durch den Betrachter sofort wahrgenommen werden.

Auch ein Ausfall bei der Darstellung der Streifen in einem Layer wird sofort auffallen. Bei der komplementären Ausbildung der Streifen entstehenden auch in diesem Fall sichtbare Zwischenräume, die der Betrachter wahrnimmt.

Gemäß einer Ausgestaltung der Erfindung ist vorgesehen, dass die Streifen und Zwischenräume ein Muster von gruppenweise konzentrischen Kreisen bilden.

Das vorstehend für die Streifen Erwähnte gilt für konzentrische Kreise entsprechend. Konzentrische Kreise bilden aber den zusätzlichen Vorteil, dass Verschiebungen der beiden Layer untereinander in alle Richtungen gleich gut nachweisbar sind, da sich unabhängig von der Verschiebungsrichtung immer dasselbe Interferenzmuster in jedem der Kreise einstellt.

Für alle der oben angegebenen Darstellungsarten der Bildinformationen in zwei (oder mehr) Layern gilt, dass Bildfehler bereits auffallen, wenn die Bildinformationen durch den Betrachter aufgrund der geringen Gesamtauswirkungen des Bildfehlers noch erfasst werden können. Dabei weisen die Bildfehler auf eine fehlerhafte Darstellung hin, sebst wenn der Betrachter die Bildinformationen vielleicht noch erfassen kann. Vorteilhaft wird daher ein Bildfehler schon zu einem vergleichsweise frühen Zeitpunkt deutlich gemacht und kann zum Anlass genommen werden, eine Wartungsmaßnahme der Head-up-Displays durchzuführen, bevor es zu weiteren und vor allem schwerwiegenderen Störungen kommt.

Gemäß einer Ausgestaltung der Erfindung ist vorgesehen, dass rechnergestützt eine Überprüfung der durch das erste Head-up-Display und das zweite Head-up-Display dargestellten Bildinformationen auf Bildfehler erfolgt.

Zusätzlich zu der intuitiven Beurteilung durch den Betrachter kann das erfindungsgemäße Verfahren auch für eine automatisierte Kontrolle des dargestellten oder darzustellenden Bildes genutzt werden. Zu diesem Zweck muss eine Überprüfung der bilderzeugenden Bilddaten oder des erzeugten Bildes erfolgen. Vorteilhaft lässt sich hierdurch der Betrieb des Fahrzeugs und die dabei begleitende Erkennung von Fehlern bei der Darstellung im Display unterstützen und automatisieren. Beispielsweise kann ein Warnsignal ausgegeben werden, wenn bei dem Verfahren automatisch Bildfehler erkannt werden, und der Betrachter des Bildes wird dadurch aufgefordert, den Bildfehler zu erkennen und geeignete Maßnahmen einzuleiten.

Gemäß einer Ausgestaltung der Erfindung ist vorgesehen, dass die rechnergestützte Überprüfung durchgeführt wird, indem mit einer Kamera ein Bild der dargestellten Bildinformationen aufgenommen wird, das Bild auf Bildfehler überprüft wird.

Diese Ausgestaltung der Erfindung ist dazu geeignet, das tatsächliche Bild zu überprüfen. Dies hat den Vorteil, dass auch Bildfehler erkannt werden können, die von der Hardware hervorgerufen werden. Ein Versatz von den beiden dargestellten Layern kann beispielsweise dadurch entstehen, dass Projektoren, die die Bilder auf die Head-up-Displays projizieren, nicht mehr richtig ausgerichtet sind. Eine andere Möglichkeit besteht darin, dass in dem (aktiven, d. h. selbstleuchtenden) Head-up-Display schadhafte Bildpunkte (Pixel) vorhanden sind.

Gemäß einer Ausgestaltung der Erfindung ist vorgesehen, dass die Daten zur Erzeugung der Bildinformationen auf Fehler überprüft werden.

Bei dieser Ausgestaltung der Erfindung werden die Daten überprüft, die zur Darstellung der Bildelemente herangezogen werden sollen. Diese können beispielsweise mit standardisierten Datensätzen verglichen werden, die in einer Speichereinrichtung abgespeichert sind. Dieses Verfahrens ist besonders dazu geeignet, Fehler aufzudecken, die bei der Darstellung von Symbolen oder Text und anderen standardisierten Bildelementen auftreten. Hier ist es leicht möglich, die Datensätze mit standardisierten Datensätzen zu vergleichen. Der Vorteil besteht darin, dass auch Bildfehler aufgedeckt werden können, die an sich durch die Hardware zu einer korrekten Wiedergabe der (fehlerhaften) Bildinformationen führen würden.

Gemäß einer Ausgestaltung der Erfindung ist vorgesehen, dass, wenn Bildfehler festgestellt wurden, eine Fehlerausgabe erfolgt.

Die Fehlerausgabe unterstützt, wie bereits erwähnt, die Ableitung von Maßnahmen, die aus Sicherheitsgründen auf die Detektion von Bildfehlern folgen sollten. Bei kleinen Bildfehlern, die den Informationsgehalt auf dem Head-up-Displays nicht gefährden, sind beispielsweise Wartungsmaßnahmen abzuleiten, die rechtzeitig erfolgen sollen, damit die Bildfehler sich nicht vergrößern (beispielsweise ein zunehmender Versatz bei der Darstellung der Layer, so dass beispielsweise Projektoren erneut auf die Head-up-Display ausgerichtet werden müssen).

Bei größeren Fehlern sind Maßnahmen abzuleiten, die den weiteren Betrieb des Fahrzeugs sicher und zuverlässig gewährleisten. Eine Maßnahme kann beispielsweise sein, dass die Leitung des Fahrzeugs durch eine externe Stelle übernommen oder unterstützt wird. Eine drastische Maßnahme kann in einer Betriebsunterbrechung liegen, wenn das Sicherheitsrisiko eines weiteren Betriebs als zu hoch eingeschätzt wird. Nach einer Reparatur der Head-up-Displays kann der Betrieb dann wieder aufgenommen werden oder das Fahrzeug wird ausgewechselt.

Gemäß einer Ausgestaltung der Erfindung ist vorgesehen, dass die Fehlerausgabe auf dem ersten und/oder zweiten Head-up-Display erfolgt.

Dies hat den Vorteil, dass für eine Fehlerausgabe kein weiteres Anzeigemedium bei dem Verfahren vorgesehen werden muss. Allerdings setzt dies voraus, dass die Head-up-Displays zumindest teilweise noch funktionsfähig sind.

Gemäß einer Ausgestaltung der Erfindung ist vorgesehen, dass die Fehlerausgabe durch Ausgabe eines Warnsignals erfolgt.

Das Warnsignal kann optisch beispielsweise über eine Warnleuchte oder akustisch beispielsweise über einen Lautsprecher ausgegeben werden. Zum Zwecke der Ausgabe des Warnsignals kann eine Ausgabevorrichtung verwendet werden, die unabhängig von der Darstellung der Head-up-Displays ist. Dies hat den Vorteil, dass das Warnsignal auch ausgegeben werden kann, wenn die Head-up-Displays aufgrund des Fehlers nicht mehr dazu in der Lage sind. Außerdem fällt einem Benutzer des Fahrzeugs ein Warnsignal, welches sich von den üblichen Darstellungsmedien unterscheidet, mehr auf.

Gemäß einer Ausgestaltung der Erfindung ist vorgesehen, dass die Bildinformationen durch eine Projektion von Licht mittels eines ersten Projektors auf das erste Head-up-Display und eines zweiten Projektors auf das zweiten Head-up-Display erfolgt, wobei das erste Head-up-Display nur das Licht des ersten Projektors reflektiert und das zweite Head-up-Display nur das Licht des zweiten Projektors reflektiert.

Diese Variante der Head-up-Displays ist vorteilhaft gut dazu geeignet, in Fahrzeugen nachgerüstet zu werden. Die Projektoren können an einer geeigneten Stelle im Fahrstand oder Cockpit des Fahrzeugs angebracht werden. Weiterhin muss beispielsweise die Frontscheibe des Fahrzeugs mit geeigneten Beschichtungen versehen werden.

Gemäß einer Ausgestaltung der Erfindung ist vorgesehen, dass das erste Head-up-Display und das zweite Head-up-Display aktive Bildpunkte aufweisen, welche zur Wiedergabe der Bildinformationen aktiviert werden können.

Diese Variante der Head-up-Displays hat den Vorteil, dass diese sehr unempfindlich gegenüber einer Verschiebung der Layer untereinander sind. Auch können die Head-up-Display bei unterschiedlichen Lichtverhältnissen vergleichsweise gut abgelesen werden.

Gemäß einer Ausgestaltung der Erfindung ist vorgesehen, dass für den Betrieb des Verfahrens ein sicherer Computer verwendet wird.

Die Verwendung von sicheren Computern hat den Vorteil, dass die hohen Sicherheitsanforderungen beispielsweise im Zugverkehr auch bei dem Betrieb der Head-up-Displays eingehalten werden können. Der Betrieb der Head-up-Displays baut somit auf einer Infrastruktur von sicheren Computern auf, die im Bahnbetrieb üblicherweise zur Verfügung gestellt werden (beispielsweis nach dem SIL-3 Standard). Auch die Überprüfung der dargestellten Bildelemente auf den Head-up-Displays wird durch einen sicheren Computer durchgeführt, so dass auch die automatische Ermittlung von Darstellungsfehlern sicher durchgeführt werden kann.

Gemäß einer Ausgestaltung der Erfindung ist vorgesehen, dass die an dem Verfahren beteiligten Komponenten in Zeitabständen einem Funktionstest unterworfen werden.

Eine regelmäßige Überprüfung der Komponenten des Darstellungsverfahrens hat den Vorteil, dass eine Ausfallsicherheit weiter vergrößert werden kann. Ziel ist es, dass die durch eine Detektionsmöglichkeit von Darstellungsfehlern verbesserte Sicherheit garantiert wird, jedoch die Wahrscheinlichkeit von zu detektieren Ausfällen dennoch möglichst geringgehalten wird. Hierdurch werden die Verfügbarkeit und Zuverlässigkeit des ausgerüsteten Fahrzeuges verbessert.

Die genannte Aufgabe wird alternativ mit dem eingangs angegebenen Anspruchsgegenstand (Darstellungsvorrichtung für eine Augmented Reality) erfindungsgemäß auch dadurch gelöst, dass die Darstellungsvorrichtung dazu eingerichtet ist, ein Verfahren gemäß einem der voranstehenden Ansprüche durchzuführen.

Die genannte Aufgabe wird alternativ mit dem eingangs angegebenen Anspruchsgegenstand (Fahrzeug mit einer Darstellungsvorrichtung für eine Augmented Reality) erfindungsgemäß auch dadurch gelöst, dass die Darstellungsvorrichtung dazu eingerichtet ist, ein Verfahren gemäß einem der voranstehenden Ansprüche durchzuführen.

Mit den beiden Vorrichtungen lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Vorrichtung.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung.

Des Weiteren sind die beschriebenen Komponenten auch durch mit den vorstehend beschriebenen Merkmalen der Erfindung kombinierbar, solange sie im Umfang der beigefügten Ansprüche liegen.

Es zeigen:
Figur 1 ein Ausführungsbeispiel der erfindungsbemäßen Vorrichtung (Darstellungsvorrichtung sowie Fahrzeug mit Darstellungsvorrichtung) mit ihren Wirkzusammenhängen schematisch,
Figur 2 ein Ausführungsbeispiel für erfindungsgemäße Head-up-Displays schematisch, wobei diese Bildelemente durch komplementäre Darstellung erzeugen,
Figur 3 und 4 die Entstehung eines Bildelementes in Form einer Ziffer aus komplementären Bildanteilen, dargestellt durch die Head-up-Display gemäß Figur 2, schematisch, wobei die Darstellung gemäß Figur 3 keinen Bildfehler aufweist und die Darstellung gemäß Figur 4 einen Bildfehler aufweist,
Figur 5 ein -Vergleichsbeispiel, welches nicht Gegenstand der Erfindung ist, für Head-up-Displays, wobei diese Bildelemente durch additive (redundante) Darstellung erzeugen,
Figur 6 ein Vergleichsbeispiel, welches nicht Gegenstand der Erfindung ist, für ein Bildelement, bei dem ein Versatz der Layer der Head-up-Displays gemäß Figur 5 durch Interferenzmuster deutlich werden,
Figur 7 ein Vergleichsbeispiel, welches nicht Gegenstand der Erfindung ist, für ein Bildelement, bei dem ein Versatz der Layer der Head-up-Displays gemäß Figur 5 farblich zu erkennen ist,
Figur 8 ein Ausführungsbeispiel einer Computer-Infrastruktur der Vorrichtung gemäß Figur 1 als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,
Figur 9 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 8 beispielhaft angedeutet sind.

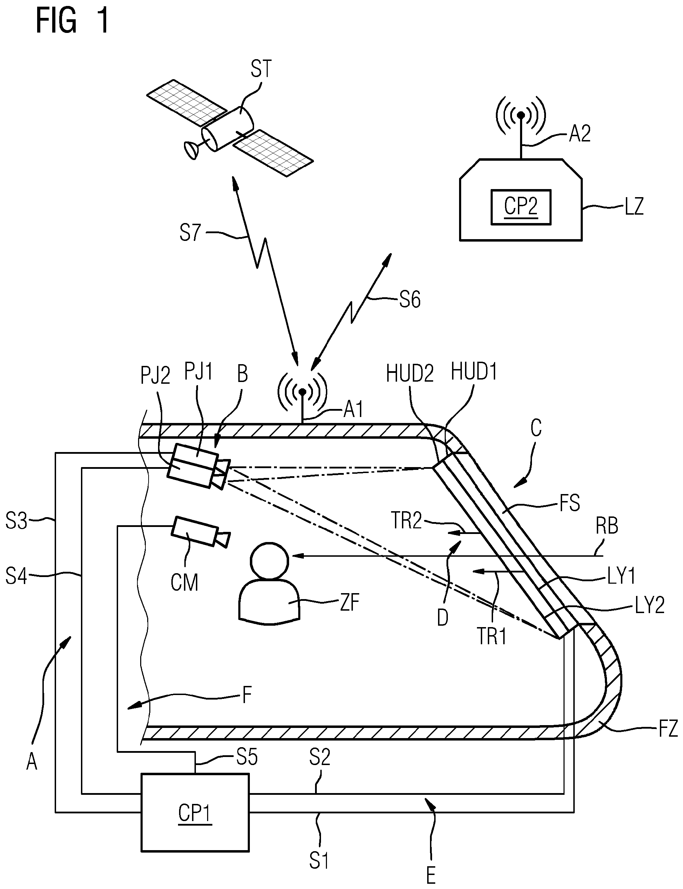

Gemäß Figur 1 ist ein Fahrzeug FZ dargestellt, dessen Fahrstand mit einer Frontscheibe FS ausgestattet ist, damit ein Zugführer ZF die Strecke vor dem Fahrzeug FZ visuell erfassen kann. Die Frontscheibe FS ist außerdem mit einem ersten Head-up-Display HUD1 und einem zweiten Head-up-Display HUD2 ausgestattet, die einen ersten Layer LY1 und einen zweiten Layer LY2 auf der Frontscheibe FS ausbilden. In dem Ausführungsbeispiel gemäß Figur 1 wird ein transparentes Bild auf dem ersten Layer LY1 durch einen ersten Projektor PJ1 und auf dem zweiten Layer LY2 durch einen zweiten Projektor PJ2 erzeugt. Die Projektion zur Bilderzeugung ist durch strichpunktierte Linien angedeutet. Außerdem ist eine Kamera CM vorgesehen, mit der die erzeugten Bilder sowie die Umgebung jenseits der Frontscheibe FS aufgenommen werden können.

Das Fahrzeug FZ ist mit einem ersten Computer CP1 ausgestattet. Dieser Computer steuert das Verfahren zur Erstellung der Augmented Reality in dem Fahrzeug FZ. Zu diesem Zweck ist das erste Head-up-Display HUD1 über eine erste Schnittstelle S1 und das zweite Head-up-Display HUD2 über eine zweite Schnittstelle S2 mit dem ersten Computer CP1 verbunden. Ebenso ist der erste Projektor PJ1 über eine dritte Schnittstelle S3 und der zweite Projektor PJ2 über eine vierte Schnittstelle S4 sowie die Kamera CM über eine fünfte Schnittstelle S5 mit dem ersten Computer CP1 verbunden.

Außerdem ist das Fahrzeug FZ mit einer ersten Antenne A1 ausgestattet. Die erste Antenne A1 steht symbolisch für eine Antennenanlage, die verschiedene Signale empfangen kann. So ist es beispielsweise möglich, Daten mit einem zweiten Computer CP2 in einer Leitzentrale LZ über eine zweite Antenne A2 unter Ausnutzung einer sechsten Schnittstelle S6 auszutauschen. Außerdem ist es mit der ersten Antenne A1 möglich, Ortungssignale eines Satelliten ST unter Ausnutzung einer siebten Schnittstelle S7 auszutauschen.

In Figur 1 sind mit den Buchstaben A bis E Teilbereiche der erfindungsgemäßen Vorrichtung angedeutet, welche unterschiedliche Funktionen für das erfindungsgemäße Verfahren erfüllen. Die Funktionen in dem Verfahren lassen sich mit diesen Schritten bereits andeuten, werden jedoch im Folgenden genauer erläutert. Die Bereiche sind im Einzelnen:

### Bereich A: Mehrkanaligkeit

Durchgängiger mehrkanaliger Aufbau von
a) Informationserzeugung (Sicherer Rechner CP1),
b) Projektion (zwei Projektoren PJ1 und PJ2),
c) Reflexion (zwei semitransparente Folien als Layer LY1 und LY2 in der Frontscheibe FS),
d) Bilddarstellung (nur zusammengenommen ergeben die Teilreflexion TR1 des ersten Layers und die Teilreflexion TR2 des zweiten Layers in Überlagerung des realen Bildes RB, welches durch die Frontscheibe dringt, die sichere Darstellung eines Bildes und Warnungen sind möglich bei Abweichungen),
e) Rücklesen (zweikanaliges Rückspielen der Information von den Folien zum Sicheren Rechner mit der Möglichkeit einer sicherheitsgerichteten Reaktion) sowie
f) Tests der beteiligten Komponenten durch die Kamera CM.

### Bereich B: Projektion durch die Projektoren PJ1, PJ2

Zwei Projektoren projizieren auf zwei in der Frontscheibe eingelassene semitransparente optisch-aktive Folien (Layer LY1, LY2) Teilbilder. Hierbei kann es sich um virtuelle Streckenelemente einer physisch nicht mehr vorhandenen Infrastruktur handeln, oder um Hinweise oder Markierungen von realen Streckenelementen.

### Bereich C: Reflexion an semitransparenten optisch-aktiven Folien auf oder in der Frontscheibe

Die semitransparenten optisch-aktiven Folien reagieren jeweils nur auf den jeweilige Projektor PJ1, PJ2 und reflektieren ein Teilbild in Richtung Zugführer ZF.

### Bereich D: Addition der komplementären oder redundanten Teilbilder und des realen Bildes zu einem sinnvollen Ganzen.

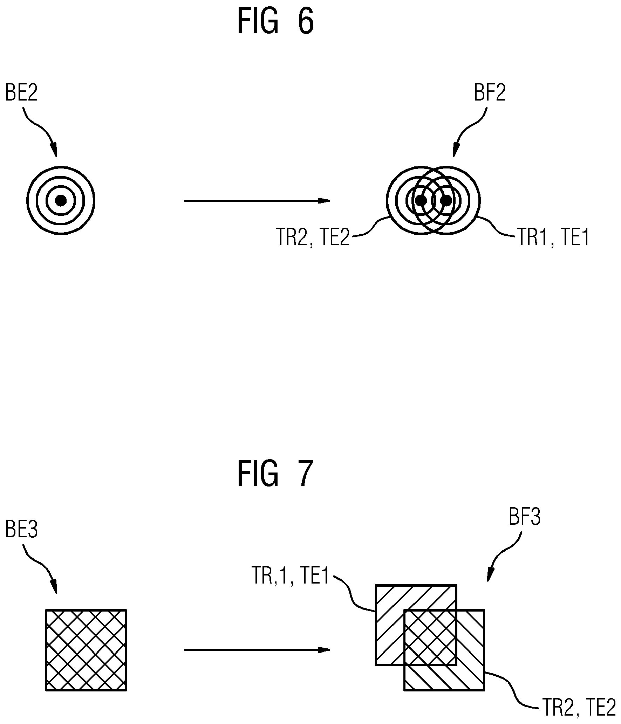

Nur bei korrekten Teilbildern und bei korrekter Reflexion ergänzen sich diese zu einem sinnvollen Gesamtbild. Zusätzlich ist es möglich, durch Einsatz von Interferenzeffekten zu erreichen, dass geringe Abweichungen der optischen Informationen in optischen Warnhinweisen resultieren, siehe auch Figur 6.

### Bereich E: Rücklesen der angezeigten Information

Die Anzeigeinformation der beiden Folien wird unabhängig voneinander wieder in den sicheren Rechner zurückgelesen. Hier kann nun eine angemessene Sicherheitsreaktion auf Grund eines festgestellten Fehlerfalles implementiert werden.

### Bereich F: Aufnehmen der angezeigten Information durch die Kamera CM

Die Aufnahme des Darstellungsergebnisses wird wieder in den sicheren Rechner zurückgelesen. Hier kann nun eine angemessene Sicherheitsreaktion auf Grund eines festgestellten Bildfehlers implementiert werden.

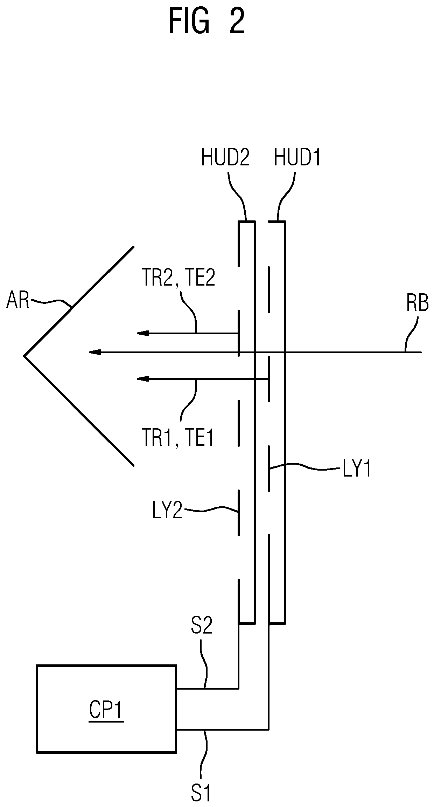

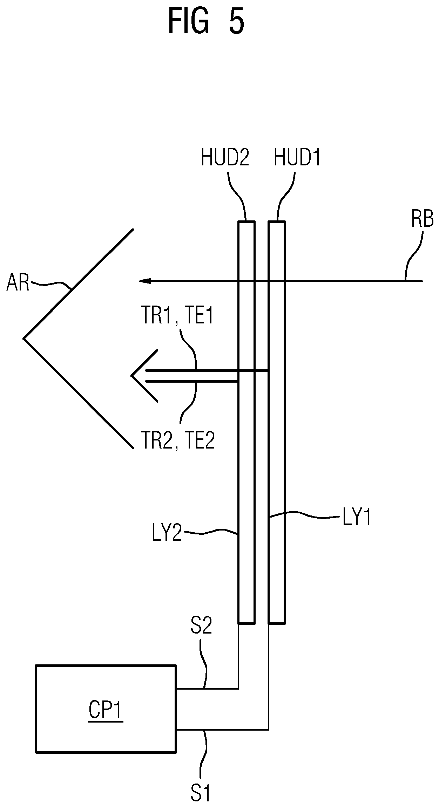

In Figur 2 und 5 sind die Head-up-Displays HUD1, HUD2 mit ihren Layern LY1, LY2 dargestellt. Die Darstellung kann als Teil der Anordnung gemäß Figur 1 verstanden werden. Zu erkennen ist zusätzlich der erste Computer CP1 sowie die erste Schnittstelle S1 und die zweite Schnittstelle S2.

Der Unterschied zwischen Figur 2 und Figur 5 besteht darin, dass die beiden Head-up-Displays HUD1, HUD2 im Falle von Figur 2 über die Layer LY1, LY2 komplementäre Teilbilder erzeugen und gemäß Figur 5 redundante Teilbilder erzeugen. Dies wird in Figur 2 dadurch angedeutet, dass die erste Teilreflexion TR1 von dem ersten Layer LY1 ausgeht und die zweite Teilreflexion TR2 von dem zweiten Layer LY2 ausgeht. Bei dem ersten Layer LY1 und dem zweiten Layer LY2 sind jeweils nur die Teilbereiche durch eine Linie dargestellt, die an der jeweiligen Erzeugung des komplementären Teilbildes beteiligt sind (dies bedeutet nicht, dass die Layer LY1, LY2 selbst unterbrochen sein müssen, sondern lediglich, dass sie in komplementären Flächenbereichen aktiviert sind; diesbezüglich ist die Darstellung gemäß Figur 2 schematisch).

Die Head-up-Displays HUD1, HUD2 gemäß Figur 2 und Figur 5 sind entsprechend dem Ausführungsbeispiel gemäß Figur 1 mit reflektierenden Layern LY1, LY2 dargestellt. Hierbei handelt es sich um passive Layer, die durch die Projektoren PJ1, PJ2 gemäß Figur 1 zur Bilderzeugung angestrahlt werden müssen. Allerdings sind auch aktive Layer LY1, LY2 denkbar, die das Bild aufgrund aktiver Elemente in den Layern LY1, LY2 erzeugen. In diesem Fall können die Layer auch selbstleuchtend ausgeführt sein, wobei dann keine Teilreflexion TR1, TR2 erzeugt werden, sondern Teilemissionen, und zwar eine erste Teilemission TE1, erzeugt durch den ersten Layer LY1, und eine zweite Teilemission TE2, erzeugt durch den zweiten Layer LY2. Die sonstige Konfiguration der Head-up-Displays HUD1, HUD2 bleibt dabei bestehen. Projektoren PJ1, PJ2 gemäß Figur 1 sind dann nicht erforderlich. Da sich die Figuren 2 und 5 strukturell nicht unterscheiden würden, sind die betreffenden Pfeile jeweils sowohl mit den Bezugszeichen TR1, TE1 als auch mit den Bezugszeichen TR2, TE2 gekennzeichnet.

Statt Teilreflexionen TR1, TR2 können also auch Teilemissionen TE1, TE2 durch die beiden Layer LY1, LY2 erzeugt werden. In diesem Fall werden keine Projektoren PJ1, PJ2, wie in Figur 1 dargestellt, verwendet, um das Bild als Reflexion zu erzeugen, sondern die Layer LY1, LY2 sind aktiv und können einzelne Bildpunkte (Pixel) zum Leuchten bringen. Auf diese Weise entsteht dann das Bild. Im Folgenden werden die Aussagen daher sowohl für die Teilreflexion TR1, TR2 als auch analog für die Teilemissionen TR1, TR zwei getroffen, soweit diese beiden Funktionsprinzipien keine Auswirkungen auf die hinsichtlich der Darstellung gemachten Aussagen haben. Soweit es nicht von Bedeutung ist, wird daher im Folgenden von Teilbildern TR1, TE1 und TR2, TE2 gesprochen, wobei diese durch Teilreflexionen TR eins, TR zwei oder durch Teilimmissionen, TE1, TE2 erzeugt werden können.

In Figur 5 ist im Gegensatz zu Figur 2 die gesamte Fläche des ersten Layers LY1 und des zweiten Layers LY2 aktiv. Dies bedeutet, dass Bildelemente jeweils redundant durch beide Layer LY1, LY2 gebildet werden. Dies ist dadurch angedeutet, dass die Teilbilder TR1, TE1 sowie TR2, TE2 des zweiten Layers LY2 in einem Pfeil zusammengefasst sind, da sich die beiden Teilbilder überlagern.

Den beiden Figuren 2 und 5 lässt sich entnehmen, wie das reale Bild RB, was beide semitransparenten Layer LY1, LY2 durchdringt, zusammen mit den Teilbildern TR1, TE1 und TE2, TR2 das Bild ergibt, welches der nicht dargestellte Zugführer ZF als Augmented Reality AR wahrnehmen kann.

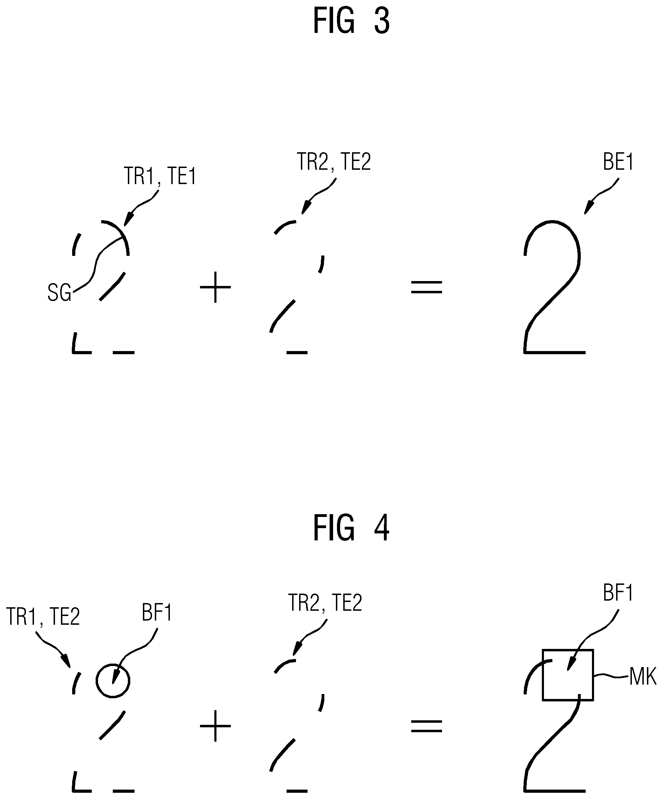

In Figur 3 ist beispielhaft die Ziffer 2 als Bildelement dargestellt, welches durch das Teilbild TR1, TE1 und das Teilbild TR2, TE2 komplementär erzeugt wird. Die Addition beider Teilbilder (angedeutet durch ein Plus) ergibt die vollständige Ziffer 2 hinter dem angedeuteten Gleichheitszeichen.

Die Darstellung gemäß Figur 4 zeigt die Darstellung der Ziffer 2 gemäß Figur 3, wobei ein Bildfehler BF1 auftritt. Dieser besteht darin, dass ein Segment SG (vgl. Figur 3) der Teilbildes TR1, TE1 nicht dargestellt wird. Wie der Gesamtdarstellung der Ziffer 2 zu entnehmen ist, fehlt dieses Segment in dem die Ziffer 2 darstellenden Linienzug. In der Darstellung ist ebenfalls eine Markierung MK vorgesehen, die durch den ersten Computer CP1 generiert wird, sobald der Fehler erkannt wurde, um den Zugführer ZF auf diesen Bildfehler BF1 hinzuweisen. Die Markierung kann beispielsweise eine den Bildfehler BF umgebenden Rahmen bestehen, wie dargestellt, jedoch auch andere Gestaltungen aufweisen, z. B. eine farbliche, teiltransparente Markierung usw.

In Figur 6 ist ein Bildelement BE2 in Form von konzentrischen Kreisen dargestellt, wobei diese nach dem in Figur 5 dargestellten Darstellungsprinzip aus redundanten Bilddaten sowohl des ersten Layers LY1 als auch des zweiten Layers LY2 bestehen. Entsteht ein Bildfehler dadurch, dass diese Layer gegeneinander verschoben werden, so entsteht der in Figur 6 dargestellte Bildfehler BF2, der aufgrund der verschobenen konzentrischen Kreise zu Interferenzmustern führt. Diese sind durch das menschliche Auge leicht wahrnehmbar, weil dieses auf Interferenzmuster sehr empfindlich reagiert. Wenn die beiden Layer gegeneinander verschoben sind, sind daher die beiden Teilbilder TR1, TE1 und TR2, TE2 zu erkennen.

In Figur 7 ist ein anderes Bildelement BE3 dargestellt, welches ebenfalls nach dem Darstellungskonzept gemäß Figur 5 gebildet wurde. Dadurch, dass auch hier die Bildinformationen redundant sind, führt ein Versatz bei den Layern LY1, LY2 dazu, dass die beiden Teilbilder TR1, TE1 und TR2, TE2 auseinanderfallen. Dieses fällt dem menschlichen Auge durch eine Farbinhomogenität der Fläche auf.

In Figur 7 ist die additiv gemischte Farbe des Bildelements 3 (ohne Fehler) durch eine Kreuzschraffur dargestellt. Die beiden einzelnen Teilbilder haben demnach einfach schraffierte Farben. Jede Schraffur stellt eine Farbe dar, wobei die Kreuzschraffur durch eine additive Farbmischung der beiden Einzelfarben entsteht. Selbstverständlich können statt Farbüberlagerungen auch Überlagerungen in der Helligkeit verwendet werden, was ebenfalls durch die Schraffuren angedeutet sein kann.

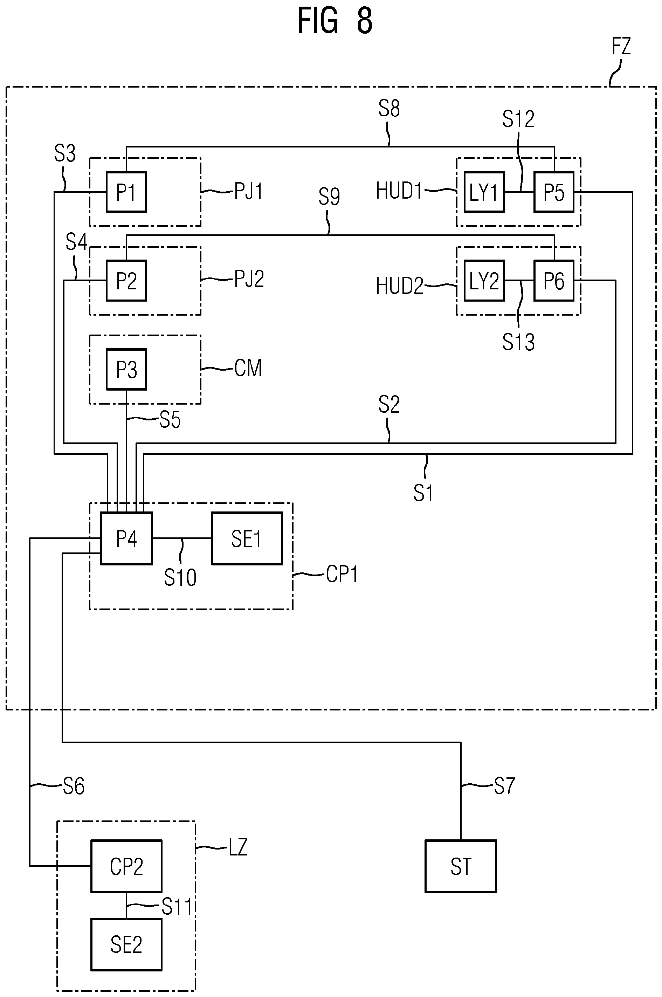

In Figur 8 lässt sich die Konfiguration gemäß Figur 1, insbesondere das Zusammenwirken der einzelnen Prozessoren P1...P6 der einzelnen Hardwarekomponenten erkennen. Ein vierter Prozessor P4 des ersten Computers CP1 steuert über die dritte Schnittstelle S3 einen ersten Prozessor P1 in dem ersten Projektor PJ1 an und über die vierte Schnittstelle S4 einen zweiten Prozessor P2 in dem zweiten Projektor PJ2, sodass diese beiden Projektoren das Bild auf das erste Head-up-Display HUD1 und das zweiten Head-up-Display HUD2 projizieren. Der erste Layer LY1 des ersten Head-up-Displays HUD1 weist einen fünften Prozessor P5 und der zweite Layer LY2 des zweiten Head-up-Displays HUD2 einen sechsten Prozessor P6 auf. Diese beiden Prozessoren sind in der Lage, über die erste Schnittstelle S1 und die zweite Schnittstelle S2 die erzeugten Bilddaten an den vierten Prozessor P4 zurück zu melden, sodass diese auf Bildfehler hin untersucht werden können. Eine Kontrolle des tatsächlich erzeugten Bildes auf dem Head-up-Display HUD1 und HUD2 kann außerdem durch die Kamera CM überprüft werden, die mit einem dritten Prozessor P3 ausgestattet ist. Der dritte Prozessor P3 kann das Kamerabild über die Schnittstelle S5 ebenfalls an den vierten Prozessor P4 übertragen.

Der vierte Prozessor P4 ist in der Lage, die zurück gemeldeten Bilddaten (über P1, P2 oder P5, P6 oder P3) mit Bildmustern zu vergleichen, die in einer ersten Speichereinheit SE1 abgespeichert sind. Dadurch kann eine Untersuchung der erzeugten Bilder auf Bildfehler erfolgen.

Um die erforderlichen Musterbilder aus der ersten Speichereinheit SE1 auswählen zu können, benötigt der erste Computer CP1 eine Ortsinformation, die über die siebte Schnittstelle S7 mittels eines Satelliten ST, beispielsweise eines GPS-Satelliten, ermittelt wird. Außerdem kann über die sechste Schnittstelle S6 der zweite Computer CP2 in der Leitzentrale LZ verwendet werden, um Fahrpläne und Streckendaten zu übertragen, die in einer zweiten Speichereinheit SE2 abgelegt sind. Auch diese Fahrpläne und Streckendaten ermöglichen es, aus der ersten Speichereinheit SE1 die richtigen Musterdaten auszuwählen.

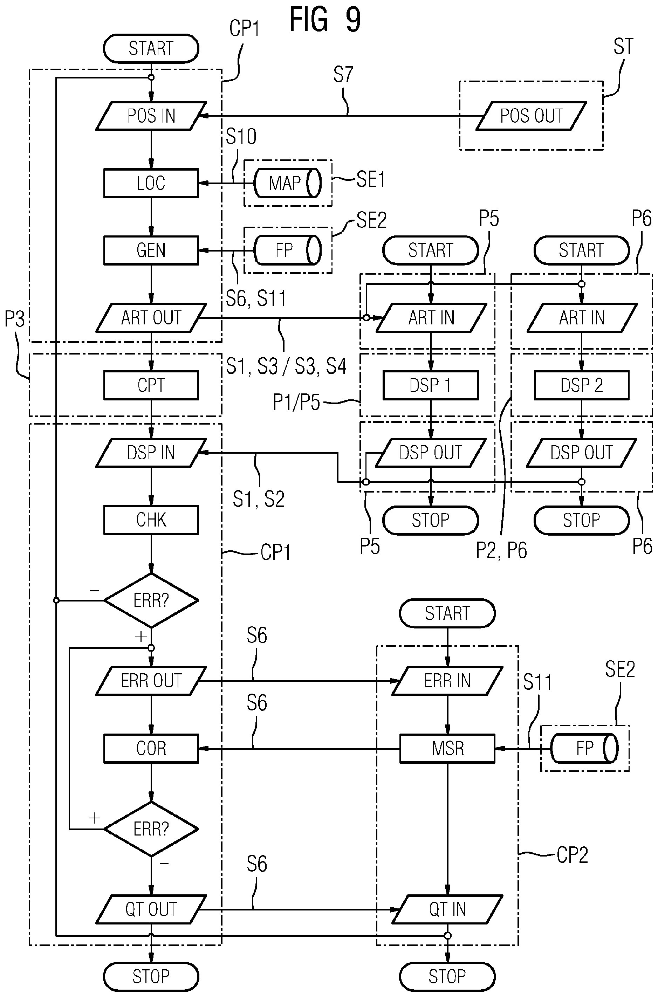

Der Verfahrensablauf lässt sich Figur 9 entnehmen. Nach dem Start des Verfahrens wird der erste Computer CP1 aktiviert. Dieser sucht beispielsweise ein GPS-Signal, welches der Satellit ST in einem Ausgabeschritt POS OUT ausgibt und welches in einem Eingabeschritt POS IN durch den ersten Computer CP1 eingelesen wird (Grundsätzlich könnte auch die Kommunikation mit einem sog. Radio Block Center (RBC) erfolgen - je nach Zweck der Verbindung, nicht dargestellt) . Dieses wird für einen Lokalisierungsschritt LOC für das Fahrzeug, in dem der erste Computer CP1 verbaut ist, genutzt. Hierfür werden auch die Daten eines Streckenplans MAP genutzt, die in der ersten Speichereinheit SE1 abgelegt sind. In einem Generierungsschritt GEN werden Daten für die Augmented Reality AR generiert, wobei auch die Daten eines Fahrplans FP genutzt werden, welche in der zweiten Speichereinheit SE verfügbar sind. Anschließend erfolgt ein Ausgabeschritt AR OUT, bei dem Daten für die Augmented Reality AR ausgegeben werden und nach Start der beiden Head-up-Displays in den fünften Prozessor P5 (Eingabeschritt AR IN) und in dem sechsten Prozessor P6 (AR IN) eingelesen werden.

Handelt es sich bei den Head-up-Displays HUD1, HUD2 um aktive Displays, so können die Informationen über den ersten Layer LY1 und den zweiten Layer LY2 mittels der Prozessoren P5 und P6 in einem ersten Anzeigeschritt DSP1 und einem zweiten Anzeigeschritt DSP2 ausgegeben werden. Auf diese Weise entsteht in der schon beschriebenen Art eine AR, indem die Anzeigen dem realen durch die Frontscheibe FS wahrnehmbaren Bild überlagert werden.

In der Variante, in der der erste Layer LY und der zweite Layer LY2 Reflexionslayer sind, kann eine Ansteuerung des ersten Projektors PJ1 durch den fünften Prozessor P5 über eine achte Schnittstelle S8 derart erfolgen, dass der erste Projektor PJ1 durch den ersten Prozessor P1 angesteuert wird. Genauso ist der sechste Prozessor P6 über eine neunte Schnittstelle S9 mit dem zweiten Prozessor P2 verbunden, sodass der sechste Prozessor P6 den zweiten Projektor PJ2 ansteuern kann. Auf diese Weise wird über die Prozessoren P1, P2 in dem Anzeigeschritt DSP1, DSP2 das Bild durch die Head-up-Displays HUD1, HUD2 ausgegeben.

Die Prozessoren P5, P6 (alternativ die Prozessoren P1, P2) können weiterhin in einem Ausgabeschritt für Anzeigedaten DSP OUT die besagten Daten an den ersten Computer CP1 übergeben, der diese Daten in einem Eingabeschritt für die Anzeigedaten DSP IN einliest. Zusätzlich oder alternativ kann nach dem Ausgabeschritt für die AR-Daten AR OUT der Prozessor P3 in der Kamera CM aktiviert werden, sodass durch die Kamera ein Erfassungsschritt CTP für die angezeigten Daten HUD1, HUD2 erfolgen kann. Hierbei handelt es sich um dasjenige Bild, welches auch der Zugführer ZF zu sehen bekommt. Die durch die Kamera CM aufgezeichneten Daten werden ebenfalls in den ersten Computer CP1 übergeben.

Die gesammelten Daten, also die Anzeigedaten und die erfassten angezeigten Daten, werden in einem Prüfschritt CHK für die Anzeige ausgewertet, um evtl. Bildfehler feststellen zu können. Es folgt ein Abfrageschritt ERR?, wobei danach gefragt wird, ob Fehler erkannt werden konnten. Ist dies nicht der Fall, startet das Verfahren erneut im ersten Computer CP1 mit dem Eingabeschritt für die Positionsdaten POS IN. Wird jedoch ein Fehler festgestellt, erfolgt ein Ausgabeschritt ERR OUT für die Daten, welcher zu einem vergleichbaren Eingabeschritt ERR IN der Leitzentrale LZ führt. In dem dort zum Einsatz kommenden zweiten Computer CP2 wird daraus eine Maßnahme MSR abgeleitet, wie auf den Fehler zu reagieren ist.

Hierbei sind auch Daten des dynamischen Fahrplans FP, der in der zweiten Speichereinheit SE2 abgelegt ist, mit einzubeziehen (als dynamischer Fahrplan sind die regelmäßig zu aktualisierenden Daten, die den realen Zugverkehr abbilden, zu verstehen). Die Maßnahme MSR führt dann zu einem Korrekturschritt COR, welcher durch den ersten Computer CP1 ausgeführt wird, und darauf zielt, dass der Fehler sich nicht auf die Sicherheit des Verkehrs auswirkt. In einem nachfolgenden Abfrageschritt ERR? wird abgefragt, ob sich der Fehler weiter auswirkt. Ist dies der Fall, erfolgt eine Rückkopplung und ein wiederholter Ausgabeschritt ERR OUT für den Fehler. Besteht der Fehler jedoch nicht mehr, so erfolgt ein Ausgabeschritt QT OUT für einen Abbruch des Korrekturverfahrens, der zu einem Eingabeschritt QT IN im zweiten Computer CP2 führt. Die Maßnahme MSR wird insofern abgebrochen und das Verfahren beginnt erneut mit dem Eingabeschritt POS IN für die Positionsdaten.

### Bezugszeichenliste

- LZ: Leitzentrale
- FZ: Fahrzeug
- FS: Frontscheibe
- RB: reales Bild
- ZF: Zugführer
- A1 ... A2: Antenne
- CP1 ... CP2: Computer
- P1 ... P6: Prozessor
- HUD1 ... HUD2: Head-up-Display
- LY1 ... LY2: Layer
- TR1 ... TR2: Teilreflexion
- TE1 ... TE2: Teilemission
- PJ1 ... PJ2: Projektor
- TR1 ... TR2: Teilreflexion
- CM: Kamera
- S1 ... S13: Schnittstelle

- BE1 ...BE3: Bildelement
- SG: Segment
- BF1 ... BF3: Bildfehler
- MK: Marker

- POS OUT: Ausgabeschritt Positionsdaten
- POS IN: Eingabeschritt Positionsdaten
- LOC: Lokalisierungsschritt
- MAP: Streckenplan

- GEN: Generierungsschritt für AR
- AR OUT: Ausgabeschritt für AR Daten
- AR IN: Eingabeschritt für AR Daten
- DSP1 ... DSP2: Anzeigeschritt für AR
- DSP OUT: Ausgabeschritt für Anzeigedaten
- DSP IN: Eingabeschritt für Anzeigedaten
- CTP: Erfassungsschritt für angezeigte Daten
- CHK: Prüfschritt für Anzeige
- ERR?: Abfrageschritt für Fehler
- ERR OUT: Ausgabeschritt Fehler
- ERR IN: Eingabeschritt Fehler
- FP: Fahrplan
- MSR: Maßnahme
- COR: Korrekturschritt
- QT OUT: Ausgabeschritt Abbruch
- QT IN: Eingabeschritt Abbruch

## Patentansprüche

1. Verfahren zum rechnergestützten Darstellen einer Augmented Reality (AR) durch ein erstes Head-up-Display (HUD1) und ein zweites Head-up-Display (HUD2), welche in einem Fahrzeug (FZ) in dem für einen Fahrzeugführer vorgesehenen Sichtfeld angeordnet sind, wobei das erste Head-up-Display (HUD1) und das zweite Head-up-Display (HUD2)
• in zwei einander überlagernden Layern (LY1, LY2) angeordnet werden,
**dadurch gekennzeichnet,**
**dass**
• das erste Head-up-Display (HUD1) und das zweite Head-up-Display (HUD2) einander zu einem Bild sich ergänzende Bildinformationen darstellen,
• die Bildinformationen Bildelemente (BE1 ... BE3) wiedergeben, welche aus komplementären ersten Segmenten und zweiten Segmenten aufgebaut sind, wobei jeweils erste Segmente und zweite Segmente für sich allein stehen, erste und zweite Segmente aneinanderstoßen, und so gemeinsam das jeweilige Bildelement (BE1 ... BE3) ergeben,
• wobei die ersten Segmente durch das erste Head-up-Display (HUD1) und die zweiten Segmente durch das zweite Head-up-Display (HUD2) dargestellt werden.

2. Verfahren nach Anspruch 1,
**dadurch gekennzeichnet,**
**dass** die Bildelemente (BE1 ... BE3) durch ein Muster von Streifen erzeugt werden, wobei die Streifen durch Zwischenräume voneinander getrennt sind.

3. Verfahren nach Anspruch 2,
**dadurch gekennzeichnet,**
**dass** die Streifen und Zwischenräume ein Muster von gruppenweise konzentrischen Kreisen bilden.

4. Verfahren nach einem der voranstehenden Ansprüche,
**dadurch gekennzeichnet,**
**dass** rechnergestützt eine Überprüfung der durch das erste Head-up-Display (HUD1) und das zweite Head-up-Display (HUD2) dargestellten Bildinformationen auf Bildfehler (BF1 ... BF3) erfolgt.

5. Verfahren nach Anspruch 4,
**dadurch gekennzeichnet,**
**dass** die rechnergestützte Überprüfung durchgeführt wird, indem
• mit einer Kamera (CM) ein Bild der dargestellten Bildinformationen aufgenommen wird, und
• das Bild auf Bildfehler (BF1 ... BF3) überprüft wird.

6. Verfahren nach einem der voranstehenden Ansprüche,
**dadurch gekennzeichnet,**
**dass** die Daten zur Erzeugung der Bildinformationen auf Fehler überprüft werden.

7. Verfahren nach Anspruch 4 bis 6,
**dadurch gekennzeichnet,**
**dass**, wenn Bildfehler (BF1 ... BF3) festgestellt wurden, eine Fehlerausgabe (ERR OUT) erfolgt.

8. Verfahren nach Anspruch 7,
**dadurch gekennzeichnet,**
**dass** die Fehlerausgabe (ERR OUT) auf dem ersten und/oder zweiten Head-up-Display (HUD1, HUD2) erfolgt.

9. Verfahren nach Anspruch 7 oder 8,
**dadurch gekennzeichnet,**
**dass** die Fehlerausgabe (ERR OUT) durch Ausgabe eines Warnsignals erfolgt.

10. Verfahren nach einem der voranstehenden Ansprüche,
**dadurch gekennzeichnet,**
**dass** die Bildinformationen durch eine Projektion von Licht mittels eines ersten Projektors (PJ1) auf das erste Head-up-Display (HUD1) und eines zweiten Projektors (PJ2) auf das zweite Head-up-Display (HUD2) erfolgt, wobei das erste Head-up-Display (HUD1) nur das Licht des ersten Projektors (PJ1) reflektiert und das zweite Head-up-Display (HUD2) nur das Licht des zweiten Projektors (PJ2) reflektiert.

11. Verfahren nach einem der voranstehenden Ansprüche,
**dadurch gekennzeichnet,**
**dass** das erste Head-up-Display (HUD1) und das zweite Head-up-Display (HUD2) aktive Bildpunkte aufweisen, welche zur Wiedergabe der Bildinformationen aktiviert werden können.

12. Verfahren nach einem der voranstehenden Ansprüche,
**dadurch gekennzeichnet,**
**dass** für den Betrieb des Verfahrens ein sicherer Computer (CP1) verwendet wird.

13. Verfahren nach einem der voranstehenden Ansprüche,
**dadurch gekennzeichnet,**
**dass** die an dem Verfahren beteiligten Komponenten in Zeitabständen einem Funktionstest unterworfen werden.

14. Darstellungsvorrichtung für eine Augmented Reality (AR)
**dadurch gekennzeichnet,**
**dass** die Darstellungsvorrichtung dazu eingerichtet ist, ein Verfahren gemäß einem der voranstehenden Ansprüche durchzuführen.

15. Fahrzeug (FZ) mit einer Darstellungsvorrichtung für eine Augmented Reality (AR)
**dadurch gekennzeichnet,**
**dass** die Darstellungsvorrichtung dazu eingerichtet ist, ein Verfahren gemäß einem der Ansprüche 1 - 13 durchzuführen.

16. Computerprogrammprodukt mit Programmbefehlen zur Durchführung des Verfahrens nach einem der Ansprüche 1 - 13.

17. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

## Claims

1. Method for computer-assisted displaying of an augmented reality (AR) by way of a first head-up display (HUD1) and a second head-up display (HUD2), which are arranged in a vehicle (FZ) in the field of view intended for a vehicle driver, wherein the first head-up display (HUD1) and the second head-up display (HUD2)
• are arranged in two layers (LY1, LY2) that overlap one another,
**characterised in that**
• the first head-up display (HUD1) and the second head-up display (HUD2) display image information which supplement one another to form an image,
• the image information renders image elements (BE1 ... BE3), which are constructed of complementary first segments and second segments, wherein first segments and second segments stand on their own in each case, first and second segments come up against one another, and thus together form the respective image element (BE1 ... BE3),
• wherein the first segments are displayed by the first head-up display (HUD1) and the second segments are displayed by the second head-up display (HUD2).

2. Method according to claim 1,
**characterised in that**
the image elements (BE1 ... BE3) are generated by a pattern of strips, wherein the strips are separated from one another by intermediate spaces.

3. Method according to claim 2,
**characterised in that**
the strips and intermediate spaces form a pattern of concentric circles in groups.

4. Method according to one of the preceding claims,
**characterised in that**
a review of the image information displayed by the first head-up display (HUD1) and the second head-up display (HUD2) for image errors (BF1 ... BF3) takes place on a computer-assisted basis.

5. Method according to claim 4,
**characterised in that**
the computer-assisted review is performed by
• an image of the displayed image information being recorded using a camera (CM), and
• the image is reviewed for image errors (BF1 ... BF3).

6. Method according to one of the preceding claims,
**characterised in that**
the data for generating the image information is reviewed for errors.

7. Method according to claim 4 to 6,
**characterised in that**
if image errors (BF1 ... BF3) are ascertained, an error output (ERR OUT) takes place.

8. Method according to claim 7,
**characterised in that**
the error output (ERR OUT) takes place on the first and/or second head-up display (HUD1, HUD2).

9. Method according to claim 7 or 8,
**characterised in that**
the error output (ERR OUT) takes place by outputting a warning signal.

10. Method according to one of the preceding claims,
**characterised in that**
the image information takes place by way of a projection of light by means of a first projector (PJ1) onto the first head-up display (HUD1) and a second projector (PJ2) onto the second head-up display (HUD2), wherein the first head-up display (HUD1) only reflects the light of the first projector (PJ1) and the second head-up display (HUD2) only reflects the light of the second projector (PJ2).

11. Method according to one of the preceding claims,
**characterised in that**
the first head-up display (HUD1) and the second head-up display (HUD2) have active image points, which can be activated to render the image information.

12. Method according to one of the preceding claims,
**characterised in that**
a secure computer (CP1) is used for the operation of the method.

13. Method according to one of the preceding claims,
**characterised in that**
the components involved in the method are subjected to a functional test at time intervals.

14. Display apparatus for an augmented reality (AR),
**characterised in that**
the display apparatus is configured to perform a method according to one of the preceding claims.

15. Vehicle (FZ) with a display apparatus for an augmented reality (AR),
**characterised in that**
the display apparatus is configured to perform a method according to one of claims 1 - 13.

16. Computer program product with program commands for performing the method according to one of claims 1 - 13.

17. Provision apparatus for the computer program product according to the last-mentioned claim, wherein the provision apparatus stores and/or provides the computer program product.

## Revendications

1. Procédé de représentation assisté par ordinateur d'une réalité (AR) augmentée par un premier affichage (HUD1) tête haute et par un deuxième affichage (HUD2) tête haute, qui sont montés dans un véhicule (FZ) dans le champ de vue prévu pour le conducteur du véhicule, dans lequel on monte le premier affichage (HUD1) tête haute et le deuxième affichage (HUD2) tête haute
• dans deux couches (LY1, LY2) superposées l'une à l'autre,
**caractérisé**
**en ce que**
• le premier affichage (HUD1) tête haute et le deuxième affichage (HUD2) tête haute représentent des informations d'image se complétant l'une l'autre en une image,
• les informations d'image reproduisent des éléments (BE1 ... BE3) d'image, qui sont construits à partir de premiers segments et de deuxièmes segments complémentaires, dans lequel respectivement des premiers segments et des deuxièmes segments sont seuls en soi, des premiers et des deuxièmes segments sont limitrophes, et donnent ainsi conjointement l'élément (BE1 ... BE3) d'image respectif,
• dans lequel on représente les premiers segments par le premier affichage (HUD1) tête haute et les deuxièmes segments par le deuxième affichage (HUD2) tête haute.

2. Procédé suivant la revendication 1,
**caractérisé**
**en ce que** l'on produit les éléments (BE1 ... BE3) d'image par un modèle de barres, les barres étant séparées les unes des autres par des espaces intermédiaires.

3. Procédé suivant la revendication 2,
**caractérisé**
**en ce que** les bandes et les espaces intermédiaires forment un motif de cercles concentriques groupe par groupe.

4. Procédé suivant l'une des revendications précédentes,
**caractérisé**
**en ce qu'**il est effectué avec assistance par ordinateur un contrôle d'erreurs (BF1 ... BF3) d'image dans les informations d'image représentées par le premier affichage (HUD1) à tête haute et par le deuxième affichage (HUD2) tête haute.

5. Procédé suivant la revendication 4,
**caractérisé**
**en ce que** l'on effectue un contrôle assisté par ordinateur en
• en enregistrant par un appareil (CM) photographique une image des informations d'image représentées, et
• en contrôlant s'il y a des erreurs (BF1 ... BF3) sur l'image.

6. Procédé suivant l'une des revendications précédentes,
**caractérisé**
**en ce que** l'on contrôle s'il y a des erreurs sur les données de production des informations d'image.

7. Procédé suivant la revendication 4 à 6,
**caractérisé**
**en ce que**, lorsqu'il a été constaté des erreurs (BF1 ... BF3) d'image, on produit une émission (ERR OUT) d'erreur.

8. Procédé suivant la revendication 7,
**caractérisé**
**en ce que** l'émission (ERR OUT) d'erreur a lieu sur le premier et/ou le deuxième affichage (HUD1, HUD2) tête haute.

9. Procédé suivant la revendication 7 ou 8,
**caractérisé**
**en ce que** l'émission (ERR OUT) d'erreur s'effectue par émission d'un signal d'alerte.

10. Procédé suivant l'une des revendications précédentes,
**caractérisé**
**en ce que** les informations d'image s'effectuent par une projection de lumière au moyen d'un premier projecteur (PJ1) sur le premier affichage (HUD1) tête haute et d'un deuxième projecteur (PJ2) sur le deuxième affichage (HUD2) tête haute, dans lequel le premier affichage (HUD1) tête haute ne réfléchit que la lumière du premier projecteur (PJ1) et le deuxième affichage (HUD2) tête haute ne réfléchit que la lumière du deuxième projecteur (PJ2).

11. Procédé suivant l'une des revendications précédentes,
**caractérisé**
**en ce que** le premier affichage (HUD1) tête haute et le deuxième affichage (HUD2) tête haute ont des points image actifs, qui peuvent être activés pour la restitution des informations d'image.

12. Procédé suivant l'une des revendications précédentes,
**caractérisé**
**en ce que** l'on utilise un ordinateur (CP1) sécurisé pour faire fonctionner le procédé.

13. Procédé suivant l'une des revendications précédentes,
**caractérisé**
**en ce que** l'on soumet, de temps à autre, à un test de fonctionnement les éléments participant au procédé.

14. Dispositif de représentation d'une réalité (AR) augmentée
**caractérisé**
**en ce que** le dispositif de représentation est agencé pour effectuer un procédé suivant l'une des revendications précédentes.

15. Véhicule (FZ) comprenant un dispositif de représentation d'une réalité (AR) augmentée,
**caractérisé**
**en ce que** le dispositif de représentation est agencé pour effectuer un procédé suivant l'une des revendications 1 à 13.

16. Produit de programme d'ordinateur comprenant des instructions de programme pour effectuer le procédé suivant l'une des revendications 1 à 13.

17. Dispositif pour disposer du produit de programme d'ordinateur suivant la dernière revendication précédente, dans lequel le dispositif met en mémoire et/ou met à disposition le produit de programme d'ordinateur.
